# Europäisches Patentamt
# European Patent Office
# Office européen des brevets

(19)

(11) Veröffentlichungsnummer: **0 142 662**
**B1**

(12) # EUROPÄISCHE PATENTSCHRIFT

(45) Veröffentlichungstag der Patentschrift:
03.02.88

(51) Int. Cl.⁴: **H 04 Q 11/04**

(21) Anmeldenummer: **84111014.1**

(22) Anmeldetag: **14.09.84**

(54) **Rangiereinrichtung für einen Digitalsignal-Kanalverteiler.**

(30) Priorität: **19.09.83 DE 3333775**

(43) Veröffentlichungstag der Anmeldung:
**29.05.85 Patentblatt 85/22**

(45) Bekanntmachung des Hinweises auf die Patenterteilung:
**03.02.88 Patentblatt 88/5**

(84) Benannte Vertragsstaaten:
**AT BE CH DE FR GB IT LI NL SE**

(56) Entgegenhaltungen:
**DE-A-3 109 802**
**FR-A-2 283 605**

**REVIEW OF THE ELECTRICAL COMMUNICATION LABORATORIES, Band 31, Nr. 2, März 1983, Seiten 146-157, Tokyo, JP; T. HANAZAWA et al.: "Data channel multiplexer system design"**
**INTERNATIONAL SWITCHING SYMPOSIUM, 21.-25. September 1981, paper 24A5, Montreal, CA, Seiten 1-5; W. BARTEL et al.: "A multiplex system for direct switching of PCM-channels at a data speed of 34 MB/S"**
**REVIEW OF THE ELECTRICAL COMMUNICATION LABORATORIES, Band 28, Nr. 5-6, Mai-Juni 1980, Seiten 328-337, Tokyo, JP; T. ARITA et al.: "Digital data switching network"**

(73) Patentinhaber: **Siemens Aktiengesellschaft Berlin und München, Wittelsbacherplatz 2, D-8000 München 2 (DE)**

(72) Erfinder: **Nirschl, Heinrich, Dipl.- Ing., Rotkäppchenstrasse 56, D-8000 München 83 (DE)**
Erfinder: **Kamp, Klaus, Dipl.- Ing., Grundstrasse 27, D-8027 Neuried (DE)**
Erfinder: **Stummer, Baldur, Dipl.- Ing., Wilhelm-Kuhnert- Strasse 21, D-8000 München 90 (DE)**

EP 0 142 662 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Rangiereinrichtung für einen Digitalsignal-Kanalverteiler zur Verteilung von 64-kbit/s-Einzelkanalsignalen und/oder 2048-kbit/s-Zeitmultiplexsignalen gleichen Rahmenaufbaus mit zweiunddreißig 8-bit-Kanälen, in denen der sechzehnte ein Kennzeichenkanal ist, mit einem ersten Bus oder ersten Einzelleitungen zum Anschluß an eingangsseitige Einrichtungen des Digitalsignal-Kanalverteilers, mit einem zweiten Bus oder zweiten Einzelleitungen zum Anschluß an ausgangsseitige Einrichtungen des Digitalsignal-Kanalverteilers, mit einem Schreib-Lese-Speicher, deseen Dateneingänge mit dem ersten Bus und deseen Datenausgänge mit dem zweiten Bus verbunden sind, und mit einem kennzeichen-Schreib-Lese-Speicher.

Für Zeitmultiplexsignale zur Übertragung von Sprache oder Daten wurden Grundsysteme für vierundzwanzig oder dreißig Kanäle entwickelt. Für Tonprogramme werden mehrere solcher Kanäle eines Pulsrahmens zusammengefaßt. Mittels Digitalsignal-Multiplexgeräten lassen sich aus diesen Zeitmultiplexsignalen weitere höhere Hierarchiestufen bilden. In diesen werden auch Bild- und Bildfernsprechsignale übertragen. Hierüber gibt die Zeitschrift "telcom report", 2(1979) Beiheft Digital-Übertragungstechnik, S. 16 bis 20, Auskunft. Die bei Sprachsignalübertragung notwendige parallele Kennzeichenübertragung wird im selben Heft auf Seiten 65 bis 71 erläutert.

Bei der zeitmultiplexen Zusammenfassung von Signalen ist nicht immer sichergestellt, daß der festgelegte Pulsrahmen eines Systems voll belegt werden kann, was zu unwirtschaftlichen Netzaufbauten führt. Zu diesen gehören auch über Vermittlung geführte Standverbindungen.

Aus der DE-C-25 38 392 ist bereits ein Digitalsignal-Kanalverteiler bekannt, der für sechzehn zu verarbeitende 2048-kbit/s-Zeitmultiplexsignale jeweils einen eigenen Koppelmodul mit Informationsspeicher und Signalisierungsspeicher aufweist, was die Kanalverteilung aufwendig macht.

Aufgabe der Erfindung ist es, die Anordnungen zur Verteilung der Kanäle zu vereinfachen.

Diese Aufgabe wird für eine Rangiereinrichtung der einleitend beschriebenen Art erfindungsgemäß dadurch gelöst, daß ein erster Umschalter vorgesehen ist, dessen erste Eingänge mit einem Schreib-Adreßzähler, dessen zweite Eingänge über eine Rangiereinstelleinrichtung mit einem Lese-Adreßzähler und dessen Ausgänge mit den Adreßeingängen des Schreib-Lese-Speichers verbunden sind, daß ein zweiter Umschalter vorgesehen ist, dessen erste Eingänge mit ersten vier Adern des ersten Busses, dessen zweite Eingänge mit zweiten vier Adern des ersten Busses und dessen Ausgänge mit den Dateneingängen des Kennzeichen-Schreib-Lese-Speichers verbunden sind, daß ein dritter Umschalter vorgesehen ist, dessen Eingänge mit den Datenausgängen des Kennzeichen-Schreib-Lese-Speichers, dessen erste Ausgänge mit ersten vier Adern des zweiten Busses und dessen zweite Ausgänge mit zweiten vier Adern des zweiten Busses verbunden sind, und daß ein vierter Umschalter vorgesehen ist, dessen ersten Eingänge über eine Kennzeichen-Synchronisiereinrichtung und über einen Kennzeichen-Schreib-Adreßzähler mit dem ersten Bus, dessen zweite Eingänge über die Rangiereinstelleinrichtung mit einem Kennzeichen-Lese-Adreßzähler und dessen Ausgänge mit den Adreßeingängen des Kennzeichen-Schreib-Lese-Speichers verbunden sind.

Vorteilhaft ist es, wenn ein Kennzeichen-Schreib-Lese-Speicher für in einem doppelten Kennzeichenüberrahmen übertragene, aus zwei 4-Bit-Wörtern bestehende 8-Bit-Kennzeichen vorgesehen ist, wenn eine Kennzeichen-Synchronisiereinrichtung für diesen doppelten Kennzeichenüberrahmen vorgesehen ist und wenn ein Kennzeichen-Schreib-Adreßzähler für die Einschreibung der 8-Bit-Kennzeichen in den Kennzeichen-Schreib-Lese-Speicher vorgesehen ist.

Vorteilhaft ist es auch, wenn ein Kennzeichen-Schreib-Lese-Speicher für in einem Kennzeichenüberrahmen übertragene 4-Bit-Kennzeichen vorgesehen ist, wenn eine Kennzeichen-Synchronisiereinrichtung für diesen Kennzeichenüberrahmen vorgesehen ist und wenn ein Kennzeichen-Schreib-Adreßzähler für die Einschreibung der 4-Bit-Kennzeichen in den Kennzeichen-Schreib-Lese-Speicher vorgesehen ist.

Beide Kennzeichen-Übertragungsprinzipien sind in der Siemens-Druckschrift "Zeitmultiplex-System PCM30F für Teilnehmeranschlußsystemgerät PCM30F-S" Seite 5, Bestell-Nr. S42022-A-1-29 beschrieben.

Der Digitalsignal-Kanalverteiler ist beispielsweise für die 8-Bit-Kennzeichen-Bearbeitung geeignet und kann durch Einstellung (im Festspeicher zusätzlich zu den Rangierfestlegungen abgespeichert) auf 4-Bit-Kennzeichen-Bearbeitung - individuell für die 2-Mbit/s-Zeitmultiplexsignale - umgeschaltet werden.

Vorteilhaft ist es, wenn ein fünfter Umschalter vorgesehen ist, dessen erste Eingänge mit den Ausgängen des Lese-Adreßzählers, dessen zweite Eingänge mit dem Kennzeichen-Lese-Adreßzähler, dessen dritte Eingänge mit einer Adressiereinrichtung und dessen Ausgänge mit den Adressiereingängen der Rangiereinstelleinrichtung verbunden sind.

Damit die Rangiereinstellung beim Ausfall der Versorgungsspannung nicht verloren geht, ist es vorteilhaft, wenn ein Festspeicher mit Logikteil vorgesehen ist, dessen Dateneingänge mit den Datenausgängen der Rangiereinstelleinrichtung, dessen Datenausgänge mit den Dateneingängen der Rangiereinstelleinrichtung und dessen Adressiereingänge mit den Ausgängen der Adressiereinrichtung verbunden sind und der wahlweise Einstelleingänge aufweist.

Vorteilhaft ist es, wenn als Schreib-Lese-Speicher, als Kennzeichen-Schreib-Lese-Speicher und/oder als Rangiereinstelleinrichtung RAMs (Random Access Memories) vorgesehen sind. Bei diesen können auch die Dateneingänge zugleich Datenausgänge sein, was eine entsprechende Anpassung der Busse erfordert.

Vorteilhaft ist es auch, wenn der Schreib-Adreßzähler, der Kennzeichen-Lese-Adreßzähler und der Lese-Adreßzähler als eine Zähleinheit ausgebildet sind.

Zur Beseitigung des Einflusses von Laufzeiten auf dem ersten Bus ist es vorteilhaft, wenn einem Eingang des zweiten Umschalters ein 4-Bit-Zwischenspeicher vorgeschaltet ist.

Ein vorteilhafter dritter Umschalter ergibt sich, wenn er durch eine Verzweigung, einen 4-Bit-Zwischenspeicher nach einem Gabelausgang und eine Torschaltung nach dem 4-Bit-Zwischenspeicher und nach dem anderen Ausgang der Verzweigung realisiert ist.

Vorteilhaft ist es, wenn als Festspeicher ein EPROM (Erasable Programmable Read Only Memory), elektrisch (EEPROM) oder mit ultraviolettem Licht (UV-EPROM) löschbar vorgesehen ist.

Eine Fernbedienung über ein im Meldewort des 2,048-Mbit/s-Rahmens für nationalen Gebrauch reserviertes Bit des Digitalsignal-Kanalverteilers ist möglich, wenn einer Bedienungsschnittstelle ein UND-Gatter vorgeschaltet ist, dessen einer Eingang mit dem ersten Bus oder einer Einzelleitung, der oder die ein Bit zur Ferneinstellung der Rangiereinrichtung führen, und dessen anderer Eingang mit der Taktversorgung verbunden ist.

Für eine Erkennung von Fehlern auf den Bussen und in den Rangiereinrichtungen ist es einerseits vorteilhaft, wenn am ersten Bus oder den entsprechenden Einzelleitungen ein Prüfbitgenerator vorgesehen ist, der den parallelen Codewörtern ein Prüfbit zufügt, und wenn an der Rangiereinrichtung eingangs- und/oder ausgangsseitig eine Auswerteeinrichtung vorgesehen sind, und ist es andererseits vorteilhaft, wenn an einem ersten Kennzeichenbus oder entsprechenden Einzelleitungen ein Prüfbitgenerator vorgesehen ist, der den parallelen Kennzeichen-Codewörtern ein Prüfbit zufügt, und wenn am Kennzeichen-Schreib-Lese-Speicher ausgangsseitig eine Auswerteeinrichtung vorgesehen ist.

Sind 8,448-Mbit/s-Multiplexsignale oder solche höherer Hierarchiestufen zu verteilen, so ist es vorteilhaft, diese mittels eines Demultiplexers erst in 2,048-Mbit/s-Zeitmultiplexsignale aufzulösen, ehe sie dem Kanalverteiler zugeführt werden. Sendeseitig sind dessen Ausgängen dann Multiplexer nachgeschaltet.

Bei einer Kanalverteilung "von Zeitmultiplexsignalen ist eine Rangiereinrichtung von Vorteil, die für eine Einfügung von Zusatzsignalen wie Meldebits oder Bits für ein erweitertes Synchronisierverfahren in die Zeitmultiplexsignale geeignet ist.

Anhand von Ausführungsbeispielen wird die Erfindung nachstehend näher erläutert. Es zeigen

Fig. 1 ein Übersichts-Blockschaltbild des erfindungsgemäßen Digitalsignal-Kanalverteilers,

Fig. 2 detailliert eine Rangiereinrichtung,

Fig. 3 die Speicherbelegung des Schreib-Lese-Speichers,

Fig. 4 eine Schalteinrichtung am Eingang des Kennzeichen-Schreib-Lese-Speichers,

Fig. 5 eine Umschalteinrichtung am Ausgang des Kennzeichen-Schreib-Lese-Speichers und

Fig. 6 das Blockschaltbild nach Fig. 1 mit einigen Ausgestaltungen,

Fig. 7 die Rangiereinrichtung nach Fig. 2 mit Prüfbit-Erzeugern und -Auswertung,

Fig. 8 einen Festspeicher mit Logikteil und

Fig. 9 eine Bedienungsschnittstelle.

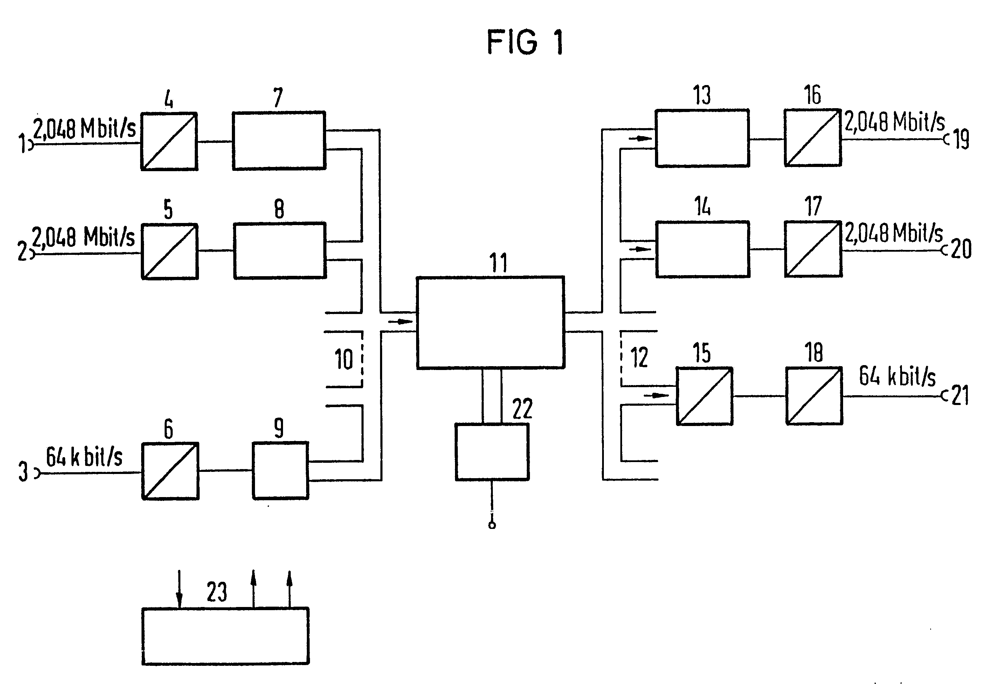

Figur 1 zeigt einen erfindungsgemäßen Digitalsignal-Kanalverteiler mit mehreren Eingängen und Ausgängen, von denen jeweils drei dargestellt sind. Die Eingänge 1 und 2 dienen der Aufnahme und die Ausgänge 19 und 20 der Abgabe von 2,048-Mbit/s-Zeitmultiplexsignalen; der Eingang 3 dient der Aufnahme und der Ausgang 21 der Abgabe eines 64-kbit/s-Einzelkanalsigmal. Einzelkanalsignale können aber auch die mehrfache Bitrate aufweisen.

Die Anordnung enthält weiter HDB3/binär-Decodierer 4 und 5, eine ko- oder kontradirektionale Schnittstelle 6, Rahmenanpassungseinrichtungen 7 und 8, einen Speicher und Serien-Parallelumsetzer 9, Busse 10 und 12, eine Rangiereinrichtung 11, eine Bedienungsschnittstelle 22, Rahmenbildungseinrichtungen 13 und 14, einen Parallel-Serienumsetzer 15, Binär/HDB3-Umsetzer 16 und 17, eine ko- oder kontradirektionale Schnittstelle 18 und eine Taktversorgung 23.

Für Niederfrequenz-Einzelkanalsignale am Eingang 3 und am Ausgang 21 sind die ko- und kontradirektionalen Schnittstellen 6 und 18 durch Godierer bzw. Decodierer zu ersetzen.

Die 2,048-Mbit/s-Zeitmultiplexsignale werden beispielsweise über den Eingang 1 und den HDB3/Binär-Umsetzer 4 der Rahmenanpassungseinrichtung 7 zugeführt. In dieser erfolgt eine Synchronisierung, eine Serien-Parallelumsetzung und eine Rahmenspeicherung. Das über dem Eingang 3 eintreffende 64-kbit/s-Einzelkanalsignal wird über eine ko- oder kontradirektionale Schnittstelle 6, dem Speicher und Serien-Parallelumsetzer 9 zugeführt. Die Taktversorgung 23 ruft die im den Rahmenanpassungseinrichtungen 7, 8 usw. und im dem Speichern und Serien-Parallelumsetzern 9 usw. gespeicherten 8-Bit-Codewörter zyklisch ab. Über den Bus 10 werden die Codewörter in die Rangiereinrichtung 11 geleitet. Entsprechend der über die Bedienungsschnittstelle 22 eingegebenen Adressierung werden die 8-bit-Codewörter, also die Kanäle, in einer neuen Reihenfolge abgerufen und auf den Bus 12 gegeben. Sind die Codewörter auf dem Bus 12 zwar nach den Ausgängen, aber für Zeitmultiplexsignale noch nicht nach den Kanälen geordnet, dann sind Rahmenbildungseinrichtungen 13 und 14 erforderlich. Für Einzelkanalsignale muß lediglich ein Parallel-Serienumsetzer 15 vorhanden sein. Die Aufnahme der jeweils für einen Ausgang bestimmten Codewörter steuert die Taktversorgung 23. Vor der Abgabe der Signale werden diese noch in den Binär/HDB3-Umsetzern 16 und 17 bzw. der ko- oder kontradirektionalen Schnittstelle 18 leitungscodiert.

Die Verteilung bewirkt beispielsweise, daß Kanäle vom Zeitmultiplexsignal am Eingang 1 sowohl an den Ausgängen 19 und 20, als auch 21 auftreten. Kanäle vom Zeitmultiplexsignal am Eingang 2 gelangen an die Ausgänge 19 und 20, während das Einzelkanalsignal am Eingang 3 zum Ausgang 20 geleitet wird.

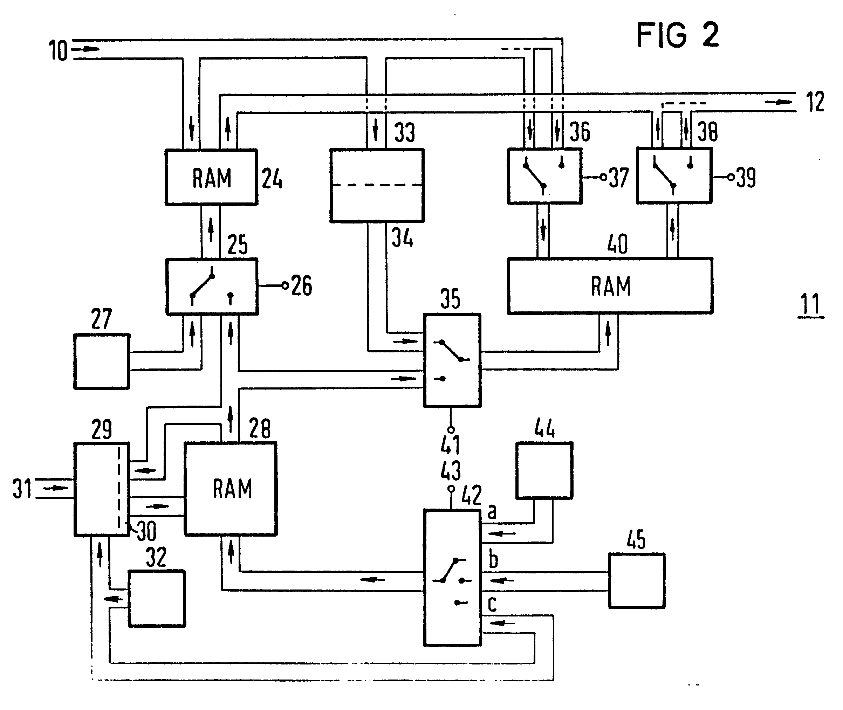

Der Digitalsignal-Kanalverteiler besteht aus handelsüblichen integrierten Bausteinen. Die HDB3/Binär-Decodierer 4 und 5 sowie die BINÄR/HDB3-Umsetzer 16 und 17 bilden integrierte Bausteine CD22103 der Firma RCA oder MJ1471 der Firma Plessey. Rahmenanpassungseinrichtungen 7 und 8 sind integrierte Bausteine PEB2030 der Firma Siemens. Ko- und kontradirektionale Schnittstellen bestehen aus integrierten Bausteinen MB60203 der Firma Siemens. Der Serien-Parallelumsetzer 9 ist ein integrierter Baustein 74LS164 oder 74LS259. Den Parallel-Serienumsetzer 15 bildet ein integrierter Baustein 74LS165 oder 74LS151. Rahmenbildungseinrichtungen 13 und 14 sind mit integrierten Bausteinen MJ1444 der Firma Plessey realisiert und die Taktversorgung 23 erfolgt im wesentlichen aus integrierten Bausteinen 74LS161, 74LS138 und 74LS193. Die Realisierung der Rangiereinrichtung 11 wird anhand der Figur 2 erläutert.

Figur 2 zeigt detailliert eine Rangiereinrichtung 11, die für eine Verteilung von 2,048-Mbit/s-Zeitmultiplexsignalen dient. Die Anordnung enthält einen Schreib-Lese-Speicher 24, einen Kennzeichen-Schreib-Lese-Speicher 40, eine Rangiereinstelleinrichtung 28, Umschalter 25, 35, 36, 38 und 42 mit Steuereingängen 26, 41, 37, 39 und 43, einen Schreib-Adreßzähler 27, einen oder mehrere Kennzeichen-Schreib-Adreßzähler 34, einen Lese-Adreßzähler 45, einen Kennzeichen-Lese-Adreßzähler 44, eine Kennzeichen-Synchronisierung 33, einen Festspeicher 29 mit Logikteil 30 und Einstelleingängen 31 sowie eine Adressiereinrichtung 32.

Über die Einstelleingänge 31 werden die Rangierfestlegungen in den Festspeicher 29 eingegeben, wo sie gegen Informationsverlust bei Betriebsspannungsausfall geschützt sind. Zum eigentlichen Rangieren wird der Inhalt des Festspeichers 29 mit Hilfe der Adressiereinrichtung 32 in die schnellere Rangiereinstelleinrichtung 28 übertragen. Dies erfolgt periodisch und wird durch zwischenzeitliches Kontroll-Rücklesen überprüft.

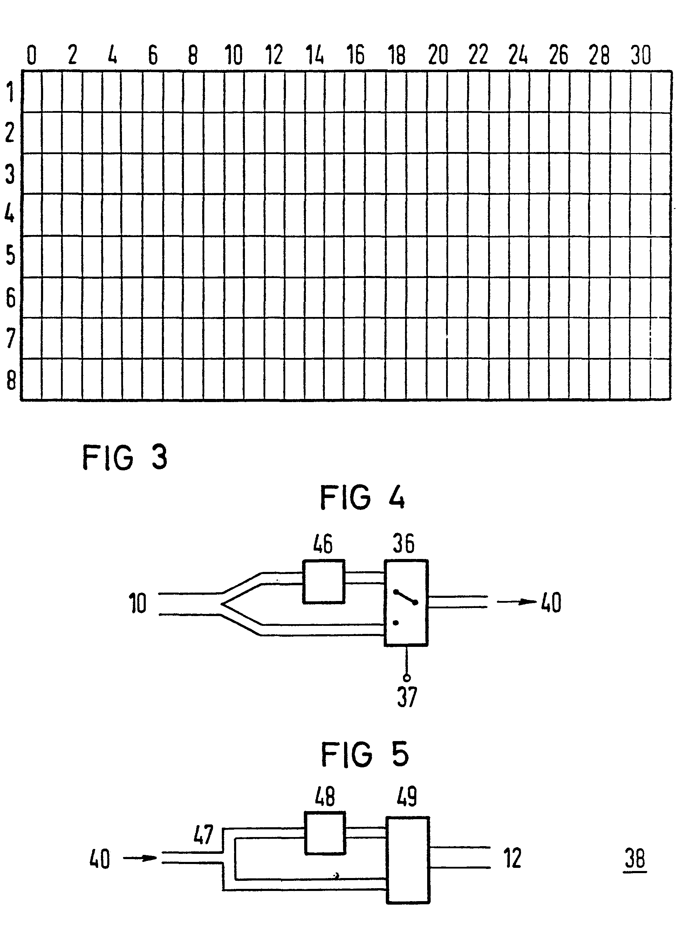

Mit Hilfe des Schreib-Adreßzählers 27 werden die über den Bus 10 ankommenden Codewörter in den Schreib-Lese-Speicher 24 entsprechend der Speicherbelegung nach Figur 3 eingeschoben. Horizontal sind dort die Kanalnummern und vertikal die Nummern der Eingänge aufgezeichnet. Für jeden Eingang wird ein 8-Bit-Codewort parallel eingespeichert. Aufgrund der aus dem Lese-Adreßzähler 45 zur Rangiereinstelleinrichtung 28 gelangenden Adressen werden Codewörter alternierend aus dem Schreib-Lese-Speicher 24 auf den Bus 12 gegeben. Zur Umschaltung von Schreib-Adreßzähler 27 auf Lese-Adreßzähler 45 wird ein 2,048-MHz-Takt an den Steuereingang 26 angelegt.

Die in den sechzehnten Kanälen ankommenden Kenhzeichen-Codewörter bedürfen einer besonderen Behandlung, weil sie jeweils aus zwei 4-Bit-Codewörtern bestehen, die einem Kennzeichenüberrahmen entstammen. Der Umschalter 36 schließt entweder die ersten vier oder die zweiten vier Adern des Busses 10 an die Dateneingänge des Kennzeichen-Schreib-Lese-Speichers 40 an. Nach der Kennzeichen-Synchronisierung im Baustein 33 bestimmt der Kennzeichen-Schreib-Adreßzähler 34 für die anliegenden 4-bit-Kennzeichencodewörter den Platz für das Einschreiben in den Kennzeichen-Schreib-Lese-Speicher 40. Das Auslesen und die Verteilung bewirkt der Kennzeichen-Lese-Adreßzähler 44 über die Rangiereinstelleinrichtung 28. Die Umschaltung von Schreiben auf Lesen bewirkt ein 8-kHz-Takt am Steuereingang 41 des Umschalters 35. Die Ausgabe erfolgt über den Schalter 38 alternierend auf die ersten und zweiten vier Adern des Busses 12. Die Umschalter 36 und 38 werden ebenfalls durch 2,048-MHz-Takte an die Steuereingänge 37 und 39 geschaltet. Eine Steuerspannung am Eingang 43 des Umschalters 42 bewirkt, daß während der einen Hälfte eines Schaltzyklusses der Eingang c mit dem Ausgang verbunden ist, während der Eingang b während der anderen Hälfte geschaltet wird. Lediglich für den sechzehnten Kanal wird der Eingang a mit dem Ausgang verbunden.

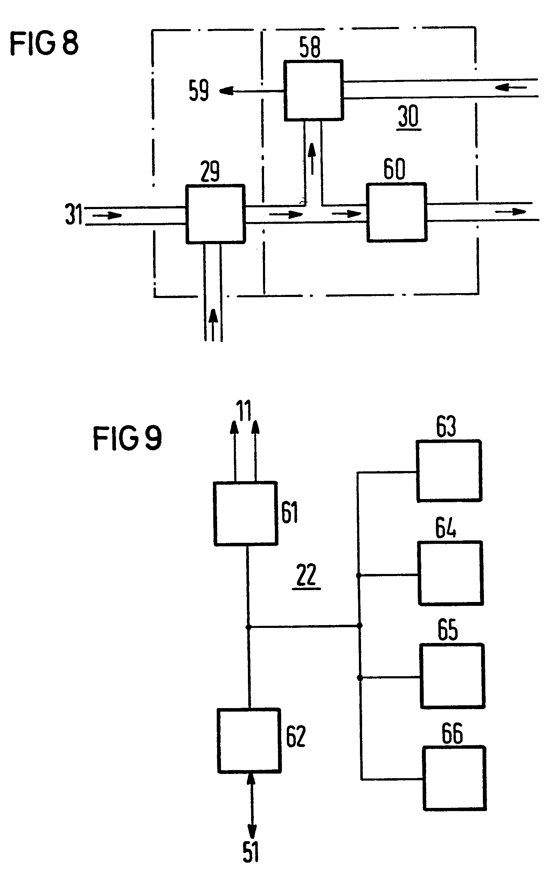

Die Rangiereinrichtung 11 enthält integrierte Bausteine. Die Type 2114 der Firma Intel realisiert den Schreib-Lese-Speicher 24, die Rangiereinstelleinrichtung 28 und den Kennzeichen-Schreib-Lese-Speicher 40. Die Typen 74LS157 und 74LS158 arbeiten als Umschalter 25, 35, 36, 38 und 42. Die Typen 74LS161 und 74LS193 sind Baustein des Schreib-Adreßzählers 27, der Adressiereinrichtung 32, des Kennzeichen-Schreib-Adreßzählers 34, des Kennzeichen-Lese-Adreßzählers 44 und des Lese-Adreßzählers 45. Der Festspeicher 29 ist entweder mit dem Baustein 2764 oder 2716 oder 2817 der Firma Intel realisiert. Den Logikteil 30 zeigt Figur 8 detailliert.

Die Kennzeichen-Synchronisierung 33 ist aus dem Siemens-Handbuch "System-Einsatz PCM30F - E&M", Bestell-Nr. S42023-A734-A101-01-77, September 1983 bekannt.

Werden aus zwei aufeinanderfolgenden einem Kanal zugeordneten 4-Bit-Kennzeichen Oktett-Kennzeichen gebildet, dann werden zwei aufeinanderfolgende Kennzeichenrahmen gebildet. Der Kennzeichenrahmen, der die hochwertigen 4-Bit-Kennzeichen trägt, ist durch eine logische Null im fünften Bit des ersten Codeworts im Kennzeichenrahmen markiert. Die ankommenden Kennzeichenrahmen sind gewöhnlich nicht synchron. Beispielsweise werden den Kennzeichenrahmen des 2,048-Mbit/s-Signals am Eingang 1 in Figur 1 gerade erste Oktetthälften, in 2,048-Mbit/s-Signal am Eingang 2 aber gerade zweite Oktetthälften empfangen und damit in den Kennzeichen-Schreib-Lese-Speicher 40 in Figur 2 eingeschrieben. Beim Auslesen aus diesem Speicher stehen damit zu diesem Zeitpunkt vom ersten 2,048-Mbit/s-Signal nur erste und vom zweiten 2,048-Mbit/s-Signal nur zweite Oktetthälften zur Verfügung. Das fünfte Bit im zu sendenden Kennzeichenrahmen legt aber für alle dreißig Kennzeichenkanäle gemeinsam fest, ob sie erste oder zweite Oktetthälften sind. Der Kennzeichen-Schreib-Lese-Speicher 40 muß daher auf eine Speicherhälfte für alle ersten und eine andere für alle zweiten Oktetthälften verdoppelt werden, so daß für jedes empfangene 2,048-Mbit/s-Signal zu jedem Zeitpunkt die jeweils zuletzt empfangenen ersten und zweiten Oktetthälften zur Verfügung stehen.

Figur 4 zeigt eine Schalteinrichtung, die die Umschaltung am Umschalter 36 verbessert. Sie enthält in den ersten vier Adern einen Zwischenspeicher 46, der die Übertragung um eine Taktperiode speichert. Dadurch wird der Einfluß von Laufzeiten auf dem Bus 10 beseitigt.

Figur 5 zeigt eine Umschalteinrichtung, die den Umschalter 38 realisiert. Sie enthält eine Verzweigung 47, einen Zwischenspeicher 48 für 4 bit für eine Taktperiode und eine Torschaltung 49.

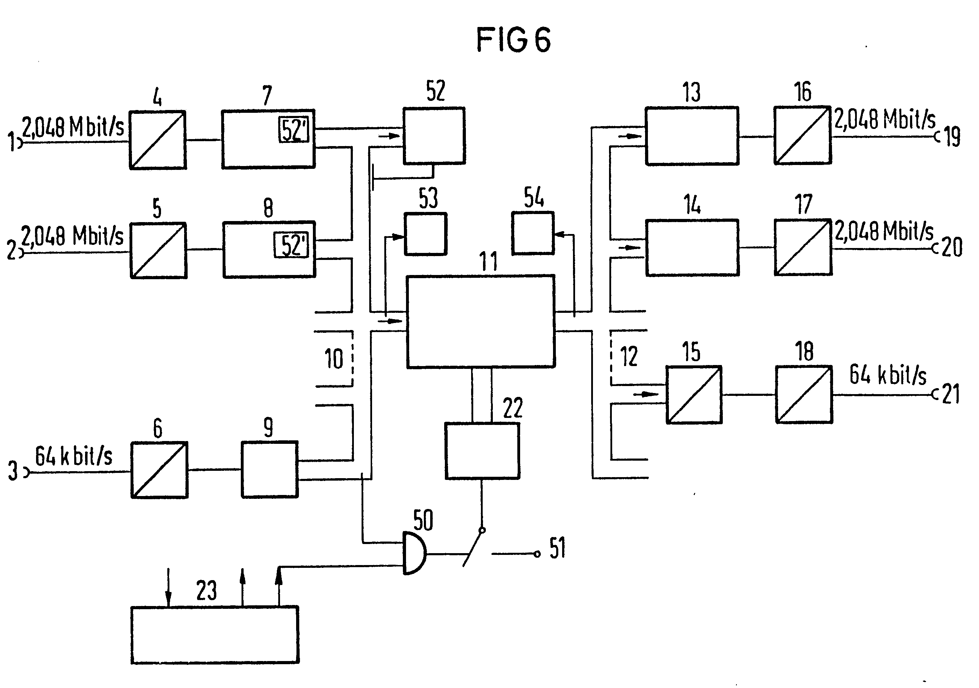

Figur 6 zeigt den Digitalsignal-Kanalverteiler nach Figur 1 mit zwei Ausgestaltungen.

Die erste bezieht sich auf eine Ferneinstellung über ein UND-Gatter 50. Die 2,048-Mbit/s-Signale an den Eingängen 1 und 2 enthalten im Meldewort ihres Rahmens für nationalen Gebrauch reservierte Bits, von denen eines zur Ferneinstellung verwendet wird. Dieses wird dem Bus 10 zum von der Taktversorgung 23 bestimmten Zeitpunkt über das UND-Gatter entnommen und der Bedienungsschnittstelle 22 zugeführt, die die Rangierung in der Rangiereinrichtung 11 veranlaßt. Zur Einstellung über eine Schnittstelle nach CCITT V.24 kann auf den Eingang 51 umgeschaltet werden.

Die zweite Ausgestaltung bezieht sich auf Prüfbit-Generatoren 52, 52' und Auswerteschaltungen 53, 54. Der Prüfbitgenerator 52, 52' empfängt parallele 8-Bit-Codewörter, wertet sie aus und fügt ihnen ein neuntes Bit als Prüfbit zu, so daß der abgehende Bus 9 bit breit sein muß. Die Auswerteschaltungen 53 und 54 überprüfen mit Hilfe des Prüfbits die 8-Bit-Codewörter am Eingang und Ausgang der Rangiereinrichtung 11 auf Fehlerfreiheit.

Der Prüfbit-Generator 52' ist für Sprache und Daten in den Rahmenanpassungs-Einrichtungen 7 und 8 enthalten. Für ein 64-kbit/s-Signal muß ein Prüfbit-Generator 52 an den Bus 10 am Ausgang des Speichers 9 angeschaltet werden.

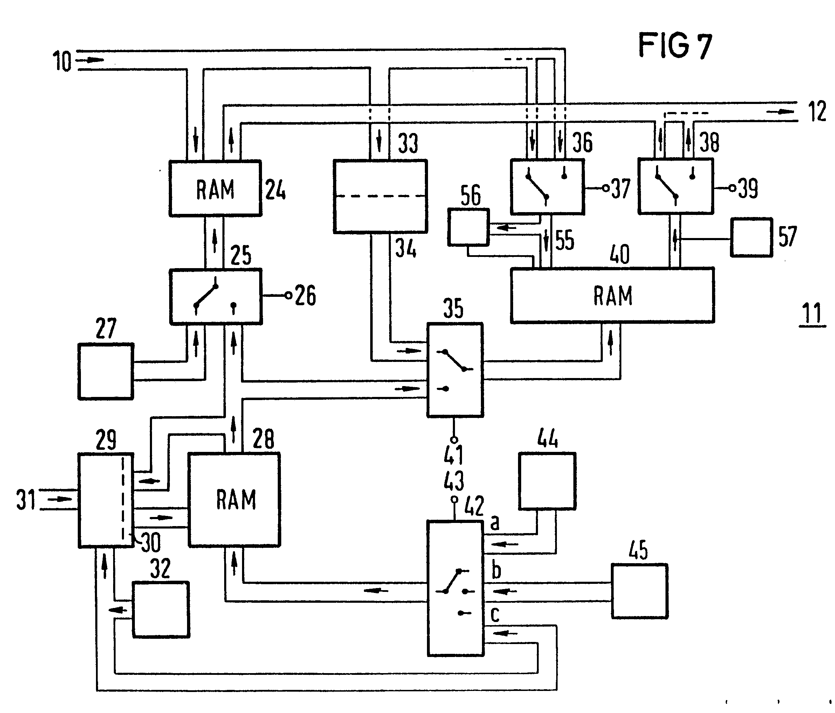

Figur 7 zeigt die Rangiereinrichtung 11 nach Figur 2 mit einem Prüfbit-Generator 56 und Auswerteeinrichtung 57. Die Prüfung erfolgt in gleicher Weise wie bei der nach Figur 6. Der Prüfbit-Generator 56 ist am Eingang und die Auswerteeinrichtung 57 ist am Ausgang des Kennzeichen-Schreib-Lese-Speichers 40 angeordnet. Der Prüfbit-Generator ist durch eine Standard Integrierte Schaltung 74LS280 realisiert.

Figur 8 zeigt detailliert den Festspeicher 29 mit Logikteil 30 nach Figur 2. Der Logikteil 30 enthält einen Komparator 58 mit Fehlermeldeausgabe 59 und einen Bustreiber 60. Der Komparator 60 ist mit zwei integrierten Bausteinen CD4585 der Firma RCA realisiert und der Bustreiber 62 in Form des Bausteins 74LS240.

Wie anhand von Figur 2 bereits erläutert wurde, wird zum Rangieren der Inhalt des Festspeichers 29 mit Hilfe der Adressiereinrichtung 32 in die schnellere Rangiereinstelleinrichtung 28 übertragen. Der Komparator 58 überprüft durch Kontroll-Rücklesen diesen Vorgang.

Figur 9 zeigt eine Bedienungsschnittstelle 22 mit I/O ( = Input/Output)-Ports 61 und 62, einen Mikroprozessor 63 (8085 von Intel), einen Programmspeicher 64 (2764 von Intel), einen Arbeitsspeicher 65 (6264 von Hitachi) und einen Festspeicher 66 (2817 von Intel).

**Patentansprüche**

1. Rangiereinrichtung (11) für einen Digitalsignal-Kanalverteiler zur Verteilung von 64-kbit/s-Einzelkanalsignalen und/oder 2048-kbit/s-Zeitmultiplexsignalen gleichen Rahmenaufbaues mit zweiunddreißig 8-bit-Kanälen, in denen der sechzehnte ein Kennzeichenkanal ist,
   mit einem ersten Bus (10) oder ersten Einzelleitungen zum Anschluß an eingangsseitige Einrichtungen des Digitalsignal-Kanalverteilers,
   mit einem zweiten Bus (12) oder zweiten Einzelleitungen zum Anschluß an ausgangsseitige Einrichtungen des Digitalsignal-Kanalverteilers,
   mit einem Schreib-Lese-Speicher (24), dessen Dateneingänge mit dem ersten Bus (10) und dessen Datenausgänge mit dem zweiten Bus (12) verbunden sind, und
   mit einem Kennzeichen-Schreib-Lese-Speicher (40),
   dadurch gekennzeichnet,
   daß ein erster Umschalter (25) vorgesehen ist, dessen erste Eingänge mit einem Schreib-Adreßzähler (27), dessen zweite Eingänge über eine Rangiereinstelleinrichtung (28) mit einem Lese-Adreßzähler (45) und dessen Ausgänge mit

den Adreßeingängen des Schreib-Lese-Speichers (24) verbunden sind,

daß ein zweiter Umschalter (36) vorgesehen ist, dessen erste Eingänge mit ersten vier Adern des ersten Busses (10), dessen zweite Eingänge mit zweiten vier Adern des ersten Busses (10) und dessen Ausgänge mit den Dateneingängen des Kennzeichen-Schreib-Lese-Speichers (40) verbunden sind,

daß ein dritter Umschalter (38) vorgesehen ist, dessen Eingänge mit den Datenausgängen des Kennzeichen-Schreib-Lese-Speichers (40), dessen erste Ausgänge mit ersten vier Adern des zweiten Busses (12) und dessen zweite Ausgänge mit zweiten vier Adern des zweiten Busses (12) verbunden sind, und

daß ein vierter Umschalter (35) vorgesehen ist, dessen ersten Eingänge über eine Kennzeichen-Synchronisiereinrichtung (33) und über einen Kennzeichen-Schreib-Adreßzähler (34) mit dem ersten Bus (10), dessen zweite Eingänge über die Rangiereinstelleinrichtung (28) mit einem Kennzeichen-Lese-Adreßzähler (44) und dessen Ausgänge mit den Adreßeingängen des Kennzeichen-Schreib-Lese-Speichers (40) verbunden sind.

2. Rangiereinrichtung nach Anspruch 1, dadurch gekennzeichnet,

daß der Kennzeichen-Schreib-Lese-Speicher (40) für in einem doppelten Kennzeichenüberrahmen übertragene, aus zwei 4-Bit-Wörtern bestehende 8-Bit-Kennzeichen vorgesehen ist, daß die Kennzeichen-Synchronisiereinrichtung (33) für diesen doppelten Kennzeichenüberrahmen vorgesehen ist und daß der Kennzeichen-Schreib-Adreßzähler (34) für die Einschreibung der 8-Bit-Kennzeichen in den Kennzeichen-Schreib-Lese-Speicher (40) vorgesehen ist.

3. Rangiereinrichtung nach Anspruch 1, dadurch gekennzeichnet,

daß der Kennzeichen-Schreib-Lese-Speicher (40) für in einem Kennzeichenüberrahmen übertragene 4-Bit-Kennzeichen vorgesehen ist,

daß die Kennzeichen-Synchronisiereinrichtung (33) für diesen Kennzeichenüberrahmen vorgesehen ist und

daß der Kennzeichen-Schreib-Adreßzähler (34) für die Einschreibung der 4-Bit-Kennzeichen in den Kennzeichen-Schreib-Lese-Speicher (40) vorgesehen ist.

4. Rangiereinrichtung nach Anspruch 1, dadurch gekennzeichnet,

daß ein fünfter Umschalter (42) vorgesehen ist, dessen erste Eingänge mit den Ausgängen des Lese-Adreßzählers (45), dessen zweite Eingänge mit dem Kennzeichen-Lese-Adreßzähler (44), dessen dritte Eingänge mit einer Adressiereinrichtung (32) und dessen Ausgänge mit den Adressiereingängen der Rangiereinstelleinrichtung (28) verbunden ist.

5. Rangiereinrichtung nach einem der vorhergehenden Ansprüche, dadurch gekennzeichnet,

daß ein Festspeicher (29) mit Logikteil (30) vorgesehen ist, dessen Dateneingänge mit den Datenausgängen der Rangiereinstelleinrichtung (28), dessen Datenausgänge mit den Dateneingängen der Rangiereinstelleinrichtung (28) und dessen Adressiereingänge mit den Ausgängen der Adressiereinrichtung (32) verbunden sind und der wahlweise Einstelleingänge (31) aufweist.

6. Rangiereinrichtung nach Anspruch 1, dadurch gekennzeichnet,

daß der Schreib-Adreßzähler (27), der Kennzeichen-Lese-Adreßzähler (44) und der Lese-Adreßzähler (45) als eine Zähleinheit ausgebildet sind.

7. Rangiereinrichtung nach Anspruch 1, dadurch gekennzeichnet,

daß einem Eingang des zweiten Umschalters (36) ein 4-Bit-Zwischenspeicher (46) vorgeschaltet ist.

8. Rangiereinrichtung nach Anspruch 1, dadurch gekennzeichet,

daß als dritter Umschalter (38) eine Verzweigung (47), ein 4-Bit-Zwischenspeicher (48) nach einem Gabelausgang und eine Torschaltung (49) nach dem 4-Bit-Zwischenspeicher (48) und nach dem anderen Ausgang der Verzweigung (47) vorgesehen sind.

9. Rangiereinrichtung nach Anspruch 1, dadurch gekennzeichnet,

daß einer Bedienungsschnittstelle (22) ein UND-Gatter (50) vorgeschaltet ist, dessen einer Eingang mit dem ersten Bus (10) oder einer Einzelleitung, der oder die ein Bit zur Ferneinstellung der Rangiereinrichtung (11) führen und dessen anderer Eingang mit der Taktversorgung verbunden ist.

10. Rangiereinrichtung nach Anspruch 1, dadurch gekennzeichnet,

daß am ersten Bus (10) oder den entsprechenden Einzelleitungen ein Prüfbitgenerator (52) vorgesehen ist, der den parallelen Codewörtern ein Prüfbit zufügt und daß an der Rangiereinrichtung (11) eingangs- und/oder ausgangsseitig eine Auswerteeinrichtung (53, 54) vorgesehen sind.

11. Rangiereinrichtung nach Anspruch 1, dadurch gekennzeichnet,

daß an einem ersten Kennzeichenbus (55) oder entsprechenden Einzelleitungen ein Prüfbitgenerator (56) vorgesehen ist, der den parallelen Kennzeichen-Codewörtern ein Prüfbit zufügt, und

daß am Kennzeichen-Schreib-Lese-Speicher (40) ausgangsseitig eine Auswerteeinrichtung (57) vorgesehen sind.

12. Rangiereinrichtung nach Anspruch 1, dadurch gekennzeichnet,

daß die Rangiereinrichtung (11) zur Einfügung von Zusatzsignalen wie Meldebits oder Bits für ein erweitertes Synchronisierverfahren in die Zeitmultiplexsignale vorgesehen ist.

## Claims

1. A jumpering device (11) for a digital signal channel distributor for the distribution of 64-kbit/s individual channel signals and/or 2048-kbit/s-t.d.m. signals of identical frame construction with thirty two 8-bit channels in which the sixteenth channel is a signalling channel,
with a first bus (10) or first individual lines for connection to input-end devices of the digital signal channel distributor, with a second bus (12) or second individual lines for connection to output-end devices of the digital signal channel distributor, with a write-read srore (24), the data inputs of which are connected to the first bus (10) and the data outputs of which are connected to the second bus (12) and
with a signalling-write-read store (40),
characterised in that a first change-over switch (25) is provided, the first inputs of which are connected to a write-address counter (27), the second inputs of which are connected via a jumper setting device (28) to a read-address counter (45), and the outputs of which are connected to the address inputs of the write-read store (24), that a second change-over switch (36) is provided, the first inputs of which are connected to the first four wires of the first bus (10), the second inputs of which are connected to second four wires of the first bus (10), and the outputs of which are connected to the data inputs of the signalling write-read store (40),
that a third change-over switch (38) is provided, the inputs of which are connected to the data outputs of the signalling-write-read store (40), the first outputs of which are connected to first four wires of the second bus (12), and the second outputs of which are connected to second four wires of the second bus (12),
and that a fourth change-over switch (35) is provided, the first inputs of which are connected via a signalling synchronising device (33) and via a signalling-write-address counter (34) to
the first bus (10), the second inputs of which are connected via the jumper setting device (28) to a signalling-read-address counter (44), and the outputs of which are connected to the address inputs of the signalling-write-read store (40).

2. A jumpering device as claimed in claim 1, characterised in that the signalling-write-read store (40) is provided for 8-bit-signalling transmitted in a double signalling superframe and comprising two 4-bit words, that the signalling synchronising device (33) is provided for this double signalling superframe, and that the signalling-write-address counter (34) is provided for entering the 8-bit signalling into the signalling-write-read store (40).

3. A jumpering device as claimed in claim 1, characterised in that the signalling-write-read store (40) is provided for 4-bit signalling transmitted in a signalling supe frame,
that the signalling synchronising device (3) is provided for this signalling superframe and that the signalling-write-address counter (34) is provided for entering the 4-bit signalling into the signalling-write-read store (40).

4. A jumpering device as claimed in claim 1, characterised in that a fifth change-over switch (42) is provided, the first inputs of which are connected to the outputs of the read-address counter (45), the second inputs of which are connected to the signalling-read-address counter (44), the third inputs of which are connected to an addressing device (32), and the outputs of which are connected to the addressing inputs of the jumper setting device (28).

5. A jumpering device as claimed in one of the preceding claims, characterised in that a read only store (29) is provided which has a logic component (30) and whose data inputs are connected to the data outputs of the jumper setting device (28), whose data outputs are connected to the data inputs of the jumper setting device (28), and whose addressing inputs are connected to the outputs of the addressing device (32) and which is optionally provided with setting inputs (31).

6. A jumpering device as claimed in claim 1, characterised in that the write-address counter (27), the signalling-read-address counter (44) and the read-address counter (45) form a counting unit.

7. A jumpering device as claimed in claim 1, characterised in that a 4-bit intermediate store (46) is connected in series with an input of the second change-over switch (36).

8. A jumpering device as claimed in claim 1, characterised in that the third change-over switch (38) comprises a branch (47), a 4-bit intermediate store (48) following a forked output, and a gate circuit (49) following the 4-bit intermediate store (48) and following the other output of the branch (47).

9. A jumpering device as claimed in claim 1, characterised in that a control interface (22) is preceded by an AND-gate (50), the first input of which is connected to the first bus (10) or individual line, which conducts one bit for the remote adjustment of the jumpering device (11), and whose other input is connected to the clock supply device.

10. A jumpering device as claimed in claim 1, characterised in that the first bus (10) or the corresponding individual lines is/are provided with a test bit generator (52) which attaches a test bit to the parallel code words and that an analysis device (53, 54) is arranged at the input and/or output of the jumpering device (11).

11. A jumpering device as claimed in claim 1, characterised in that a first signalling bus (55) or the corresponding individual lines is/are provided with a test bit generator (56) which attaches a test bit to the parallel signalling code words and that an analysis device (57) is arranged at the output of the signalling write-read-store (40).

12. A jumpering device as claimed in claim 1, characterised in that the jumpering device (11) serves to insert additional signals, such as message bits or bits for an extended synchronising process, into the t.d.m. signals.

## Revendications

1. Dispositif de répartition (11) pour un répartiteur de canaux de transmission de signaux numériques servant à réaliser la répartition de signaux de canaux individuels à 64 kbits/s et/ou de signaux de multiplexage temporel à 2048 kbits/s possédant la même structure de trame et comportant trente-deux canaux à 8 bits, parmi lesquels le seizième canal est un canal de transmission de signaux caractéristiques, et comportant

un premier bus (10) ou des premières lignes individuelles pour le raccordement à des dispositifs, situés du côté entrée, du répartiteur de canaux de transmission de signaux numérisés,

un second bus (12) ou des secondes lignes individuelles pour le raccordement à des dispositifs, situés du côté sortie, du répartiteur de canaux de transmission de signaux numériques,

une mémoire d'enregistrement-lecture (24), dont les entrées de données sont reliées au premier bis (10) et dont les sorties de données sont reliées au second bus (12), et

une mémoire (40) d'enregistrement-lecture de signaux caractéristiques,

caractérisé par le fait

qu'il est prévu un premier commutateur (25), dont des premières entrées sont reliées à un compteur d'adresses d'enregistrement (27) et dont des secondes entrées sont reliées par l'intermédiaire d'un dispositif (28) se réglage de répartition à un compteur d'adresses de lecture (45) et dont les sorties sont reliées aux entrées d'adresses de la mémoire d'enregistrement-lecture (24),

qu'il est prévu un second commutateur (36), dont des premières entrées sont reliées aux quatre premiers conducteurs du premier bus (10) et dont des secondes entrées sont reliées à quatre seconds conducteurs du premier bus (10) et dont les sorties sont reliées aux entrées de données de la mémoire (40) d'enregistrement-lecture de signaux caractéristiques,

qu'il est prévu un troisième commutateur (38), dont les entrées sont reliées aux sorties de données de la mémoire (40) d'enregistrement-lecture de signaux caractéristiques et dont des premières sorties sont reliées à quatre premiers conducteurs du second bus (12) et dont des secondes sorties sont reliées à quatre seconds conducteurs du second bus (12), et

qu'il est prévu un quatrième commutateur (35), dont des premières entrées sont reliées par l'intermédiaire d'un dispositif (33) de synchronisation de signaux caractéristiques et par l'intermédiaire d'un compteur (34) d'adresses d'enregistrement de signaux caractéristiques, au premier bus (10), et dont des secondes entrées sont reliées par l'intermédiaire du dispositif (26) de réglage de répartition à un second compteur (44) d'adresses de lecture de signaux caractéristiques et dont les sorties sont reliées aux entrées d'adresses de la mémoire (40) d'enregistrement-lecture de signaux caractéristiques.

2. Dispositif de répartition suivant la revendication 1, caractérisé par le fait que la mémoire (40) d'enregistrement-lecture de signaux caractéristiques est prévue pour des signaux caractéristiques à 8 bits transmis dans une trame double de signaux caractéristiques, de rang supérieur, et constitués par deux mots à 4 bits, que le dispositif (33) de synchronisation de signaux caractéristiques est prévu pour cette trame double de signaux caractéristiques, de rang supérieur, et que le compteur (34) d'adresses d'enregistrement de signaux caractéristiques est prévu pour l'enregistrement des signaux caractéristiques à 8 bits dans la mémoire (40) d'enregistrement-lecture de signaux caractéristiques.

3. Dispositif de répartition suivant la revendication 1, caractérisé par le fait que la mémoire (40) d'enregistrement-lecture de signaux caractéristiques est prévue pour les signaux caractéristiques à 4 bits transmis dans une trame de signaux caractéristiques, de rang supérieur,

que le dispositif (33) de synchronisation de signaux caractéristiques est prévu pour cette trame de signaux caractéristiques, de rang supérieur, et

que le compteur (34) d'adresses d'enregistrement de signaux caractéristiques est prévu pour l'enregistrement des signaux caractéristiques à 4 bits dans la mémoire (40) d'enregistrement-lecture de signaux caractéristiques.

4. Dispositif de répartition suivant la revendication 1, caractérisé par le fait qu'il est prévu un cinquième commutateur (42), dont des premières entrées sont reliées aux sorties du compteur d'adresses de lecture (45) et dont des secondes entrées sont reliées au compteur (44) d'adresses de lecture de signaux caractéristiques et dont des troisièmes entrées sont reliées à un dispositif d'adresses (32) et dont les sorties sont reliées aux entrées d'adressage du dispositif (26) de réglage de répartition.

5. Dispositif de répartition suivant l'une des revendications précédentes, caractérisé par le fait qu'il est prévu une mémoire morte (29) comportant une partie logique (30), dont des entrées de données sont reliées aux sorties de données du dispositif (26) de réglage de répartition et dont des sorties de données sont reliées aux entrées de données du dispositif (26) de réglage de répartition et dont des entrées d'adressage sont reliées aux sorties du dispositif d'adressage (32), et qui comporte au choix des entrées de réglage (31).

6. Dispositif de répartition suivant la revendication 1, caractérisé par le fait que le compteur d'adresses d'enregistrement (27), le compteur (44) d'adresses de lecture de signaux caractéristiques et le compteur (45) d'adresses de lecture sont réalisés sous la forme d'une unité de comptage.

7. Dispositif de répartition suivant la revendication 1, caractérisé par le fait qu'une mémoire intermédiaire à 4 bits (46) est branchée en amont d'une entrée du second commutateur (36).

8. Dispositif de répartition suivant la revendication 1, caractérisé par le fait qu'il est prévu, en tant que troisième commutateur (38), un aiguillage (47), une mémoire intermédiaire à 4 bits (46) branchée en aval de la sortie du terminal et un circuit de porte (49) monté en aval de la mémoire intermédiaire à 4 bits (48) et en aval de l'autre sortie de l'aiguillage (47).

9. Dispositif de répartition suivant la revendication 1, caractérisé par le fait qu'en amont de l'interface de commande (22) se trouve branchée une porte ET (50), dont une entrée est reliée à un premier bus (10) ou à une ligne individuelle, qui transmet un bit pour le réglage à distance du dispositif de répartition (11) et dont l'autre entrée est reliée au circuit délivrant la cadence.

10. Dispositif de répartition suivant la revendication 1, caractérisé par le fait que dans le premier bus (10) ou dans les lignes individuelles correspondantes, il est prévu un générateur (52) de bits de contrôle, qui ajoute un bit de contrôle aux mots de code parallèles et qu'un dispositif d'évaluation (53, 54) est prévu côté entrée et/ou côté sortie dans le dispositif de répartition (11).

11. Dispositif de répartition suivant la revendication 1, caractérisé par le fait qu'il est prévu, dans un premier bus (55) de transmission de signaux caractéristiques ou dans des lignes individuelles correspondantes, un générateur (56) de bits de contrôle, qui ajoute un bit de contrôle aux mots parallèles de code de signaux caractéristiques, et qu'un dispositif d'évaluation (57) est prévu sur le côté sortie de la mémoire (40) d'enregistrement-lecture de signaux caractéristiques.

12. Dispositif de répartition suivant la revendication 1, caractérisé par le fait que le dispositif de répartition (11) est prévu pour l'insertion de signaux supplémentaires tels que des bits de signalisation ou des bits prévus pour un procédé étendu de synchronisation, dans les signaux de multiplexage temporel.

# FIG 1

2,048 Mbit/s

0 142 662

FIG 2

FIG 3

FIG 4

FIG 5

# FIG 6

0 142 662

FIG 7

FIG 8

FIG 9